# FASCICULE DE BREVET EUROPEEN

(11) **EP 4 061 564 B1**
(45) Date de publication et mention de la délivrance du brevet: **24.12.2025**
(21) Numéro de dépôt: 20823905.3
(22) Date de dépôt: 17.11.2020
(51) Int. Cl.: B22F 3/105, B29B 13/06, B29C 64/153, B29C 64/165, B29C 64/357, B29C 64/364, B29C 64/371, B33Y 40/00

(54) **MODULE DE FOURNITURE DE POUDRE DE FABRICATION ADDITIVE PERMETTANT LE SECHAGE DE POUDRE**
ADDITIVES HERSTELLUNGSPULVERVERSORGUNGSMODUL, DAS DIE TROCKNUNG DES PULVERS ERMÖGLICHT
FEEDING MODILE FOR ADDITIVA MANUFACTURING POWDER ALLOWING DRYING OF THE POWDER

(30) Priorité: 18.11.2019 FR 1912852
(43) Date de publication de la demande: 28.09.2022
(73) Titulaire: AddUp, 63118 Cébazat (FR)
(72) Inventeur: EL OUAZZANI TAYIBI, Ali, 63118 CÉBAZAT (FR); ANGELE, Ludovic, 63118 CÉBAZAT (FR)
(74) Mandataire: Novagraaf Group
(86) Numéro de dépôt international: PCT/FR2020/052099
(87) Numéro de publication internationale: WO 2021/099728

(56) Documents cités:
- WO-A1-2017/194387
- WO-A1-2018/087087

## Description

### DOMAINE DE L'INVENTION

La présente invention concerne le domaine général des machines de fabrication additive et plus particulièrement le domaine du séchage de poudre dans les machines de fabrication additive.

### ETAT DE LA TECHNIQUE

La fabrication additive sélective consiste à réaliser des objets tridimensionnels par consolidation de zones sélectionnées sur des strates successives de matériau pulvérulent (poudre métallique, poudre de céramique, etc...).

Si la poudre de fabrication additive chargée dans la machine de fabrication additive présente un taux d'humidité important, les pièces fabriquées à partir de cette poudre sont de plus faible qualité et présentent plus souvent des défauts.

A cet effet, une machine de fabrication additive peut comprendre un système de séchage. Classiquement les systèmes de séchage comprennent des éléments de chauffage pour élever la température de la poudre. Il existe également des systèmes de tirage à vide pour extraire l'humidité de la poudre. Une autre solution consiste à utiliser des éléments mécaniques adaptés pour plonger à l'intérieur d'un réservoir contenant de la poudre de sorte à agiter ou brasser cette dernière. Ces différentes solutions peuvent être mises en œuvre individuellement ou collectivement. Ces différentes solutions ne présentent pas une efficacité suffisante ou bien perturbent sensiblement le bon fonctionnement de la machine de fabrication additive. WO2017/194387 A1 divulgue une machine de fabrication additive de l'art antérieur.

### EXPOSE DE L'INVENTION

Un but de l'invention est de proposer une machine de fabrication additive qui permet de sécher plus efficacement de la poudre sans perturber le bon fonctionnement de la machine de fabrication additive.

Le but est atteint dans le cadre de la présente invention grâce à un dispositif de fabrication additive selon la revendication 1.

D'une part le système de mise en circulation qui permet de mettre en mouvement de la poudre humide et d'autre part le système d'aspiration qui permet d'aspirer l'humidité de l'environnement gazeux de la poudre permettent globalement de sécher plus rapidement et plus efficacement la poudre. Aucun élément mécanique mobile plongeant à l'intérieur d'un réservoir contenant de la poudre, comme par exemple un malaxeur, n'est utilisé de sorte que les moyens de séchage ne perturbent pas le bon fonctionnement de la machine de fabrication additive.

Un tel dispositif est avantageusement complété par les différentes caractéristiques selon les revendications dépendantes 2-8.

Avantageusement, mais facultativement, le module de fabrication du dispositif peut être complété par un système de récupération pour récupérer de la poudre non consolidée au cours de la fabrication additive de l'objet et pour rediriger la poudre récupérée vers l'entrée du module de fourniture. L'invention porte également sur un procédé de séchage de poudre de fabrication additive utilisant un module de fourniture tel qu'on l'a présenté plus haut et comprenant lorsque de la poudre est présente dans la trémie principale une étape de mise en circulation de la poudre dans la boucle de circulation par le système de mise en circulation.

Avantageusement, mais facultativement, le procédé peut être complété par les différentes étapes suivantes prises seules ou en combinaison :
- une étape de mesure du taux d'humidité dans la boucle de circulation,
- une étape de comparaison du taux d'humidité mesuré à un taux seuil,
- une étape d'arrêt de la mise en circulation de la poudre, l'étape d'arrêt de la mise en circulation étant mise en œuvre selon le résultat de l'étape de comparaison ;
une étape de tamisage de la poudre mise en circulation.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :
La figure 1, est une représentation schématique d'une machine de fabrication additive selon un mode de réalisation de l'invention.

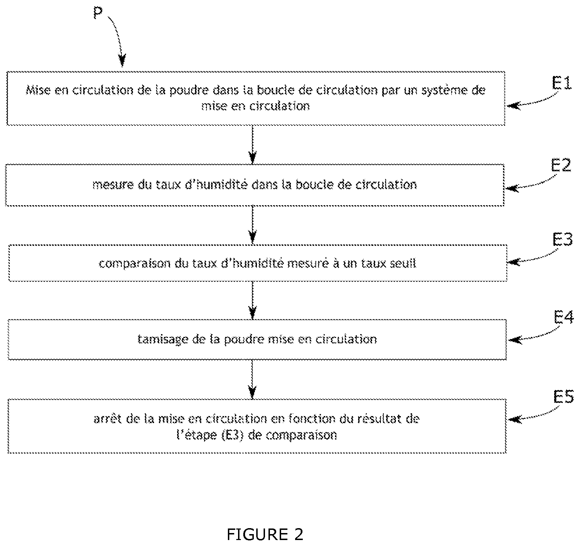

La figure 2, est une représentation schématique d'un procédé de séchage de poudre de fabrication additive selon un mode de réalisation de l'invention.

### DESCRIPTION DETAILLEE DE L'INVENTION

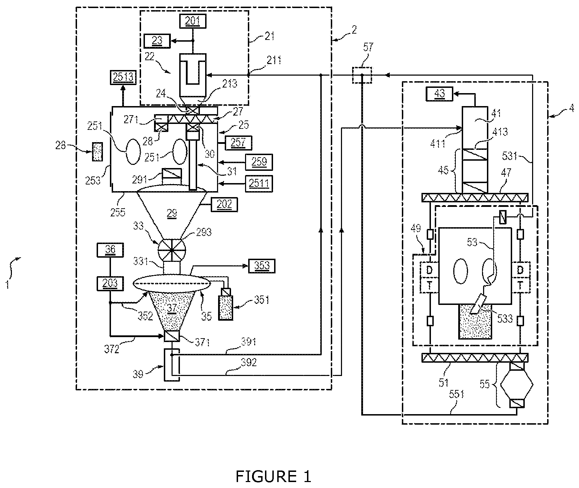

La figure 1 représente un dispositif de fabrication additive 1 comprenant un module de fourniture de poudre 2 et un module de fabrication 4.

### Module de fourniture

Le module de fourniture 2 comprend dans sa partie supérieure un système d'aspiration 21 relié à un premier circuit d'évacuation de gaz 23. Le système d'aspiration 21 présente une entrée 211 et une sortie 213 située au bas du système d'aspiration 21. Le système d'aspiration 21 est adapté pour générer une force d'aspiration au niveau de l'entrée 211 dirigée vers l'intérieur du système d'aspiration 21. Le premier circuit d'évacuation de gaz 23 peut comprendre une pompe à vide pour générer la force d'aspiration. Le système d'aspiration 21 est adapté pour recevoir de la poudre de fabrication additive depuis l'entrée 211 et la conserver. La poudre conservée se situe au bas du système d'aspiration 21 et peut être extraite par la sortie 213.Le système d'aspiration 21 peut comprendre un filtre à poudre pour que la poudre ne passe pas dans le premier circuit d'évacuation 23. Le système d'aspiration 21 comprend un dispositif qui permet de séparer la poudre du gaz comme par exemple un cyclofiltre 22. D'autres dispositifs existent pour séparer la poudre du gaz comme un caisson de filtration comprenant des filtres, un cyclone ou une boîte de décharge.

Le module de fourniture 2 comprend un boîtier 25 situé en dessous du système d'aspiration 21. Le boîtier 25 comprend différentes parois qui définissent une chambre. Le boîtier 25 peut être fermé de sorte que la chambre est un volume hermétiquement clos par rapport à l'extérieur du dispositif. Le boîtier est adapté pour que des objets situés à l'intérieur du boîtier puissent être déplacés et manipulés. En particulier, le boîtier comprend des instruments pour déplacer et manipuler des objets à l'intérieur de la chambre pendant que la chambre est fermée.

Le boîtier 25 peut notamment être une boite à gants. Dans ce cas, le boîtier présente deux orifices dans lesquels sont aménagés des gants 251 de sorte que le caractère étanche du boîtier est conservé. Les gants 251 sont des instruments pour déplacer et manipuler des objets à l'intérieur de la chambre pendant que la chambre est fermée. Un opérateur peut, en enfilant les gants 251, manipuler depuis l'extérieur de la boite à gants 25 des objets situés à l'intérieur de la boite à gants. Une paroi de la boite à gants peut être transparente afin de permettre à l'opérateur d'observer les objets à manipuler.

En particulier les objets peuvent être des récipients ou des pots 28 adaptés pour contenir de la poudre de fabrication additive. Les récipients et les pots peuvent être fermés par des couvercles.

Les instruments du boîtier sont adaptés pour déplacer et fermer des récipients ou des pots 28 à l'intérieur de la chambre pendant que la chambre est fermée.

Une des parois du boîtier 25 présente une première porte 253. La première porte 253 est mobile entre une position ouverte dans laquelle un récipient peut être déplacé de l'extérieur du dispositif dans la chambre ou de la chambre à l'extérieur du dispositif et une position fermée dans laquelle la chambre est séparée de manière étanche de l'extérieur du dispositif. La première porte 253 peut être fermée de façon à ce que le boîtier soit hermétiquement séparé de l'extérieur. Il est également possible de faire entrer ou sortir des couvercles pour fermer les récipients ou les pots.

Le boîtier 25 peut comprendre une zone de transit 255 au sein de laquelle un ou plusieurs récipients peuvent être entreposés et empilés.

Le boîtier 25 peut comprendre un capteur 257 d'oxygène. Le capteur 257 est adapté pour mesurer la fraction en oxygène à l'intérieur du boîtier.

Le boîtier 25 peut comprendre un circuit d'alimentation 259 en air et un circuit d'alimentation 2511 en gaz inerte. Le gaz inerte peut en particulier être du diazote ou de l'Argon.

Le boîtier 25 peut comprendre un deuxième circuit d'évacuation de gaz 2513 qui peut comprendre une pompe à vide pour générer la force d'aspiration.

L'ensemble du circuit d'alimentation 259 en air, du circuit d'alimentation 2511 en gaz inerte et du deuxième circuit d'évacuation de gaz 2513 définit un système de contrôle de flux gazeux qui permet de contrôler la fraction en oxygène et la fraction en gaz inerte dans la chambre.

Le module de fourniture 2 comprend un système de dosage 27 situé en dessous du système d'aspiration 21. Le système de dosage 27 est relié à la sortie 213 du système d'aspiration 21. La poudre conservée dans le système d'aspiration 21 et qui se situe au bas du système d'aspiration 21 peut être extraite par la sortie 213 vers le système de dosage 27.

Une vanne 24 se situe entre le système d'aspiration 21 et le système de dosage 27. La vanne 24 en configuration ouverte permet le passage de poudre et la vanne 24 en configuration fermée permet de séparer de manière étanche le système d'aspiration 21 du système de dosage 27. Lorsque le système d'aspiration 21 aspire de la poudre, la vanne 24 est fermée de sorte que l'aspiration a lieu uniquement au niveau de l'entrée 211 et dirigée vers l'intérieur du système d'aspiration 21. La fermeture de la vanne 24 peut être automatiquement déclenchée par la mise en fonctionnement de l'aspiration de poudre dans le système d'aspiration 21.

Le système de dosage 27 permet d'isoler une quantité précise de poudre à partir de la poudre conservée dans le système de dosage. Cette quantité précise peut être délivrée à une sortie 271 du système de dosage 27. La sortie 271 est située à l'intérieur du boitier 25 et présente une vanne 28. La vanne 28 en configuration ouverte permet le passage de poudre du système de dosage 27 vers l'intérieur du boitier 25 et la vanne 28 en configuration fermée permet de séparer de manière étanche le système de dosage 27 de l'intérieur du boitier 25.

La vanne 28 est notamment fermée lorsque la première porte 253 du boitier 25 est en position ouverte.

Le système de dosage peut être par exemple une vis de dosage. La vis de dosage est contenue dans un fourreau qui s'étend dans une direction qui est classiquement une direction horizontale. Lorsque la vis est mise en mouvement et que de la poudre est versée du système d'aspiration 21 vers le système de dosage 27 par la vanne 24 ouverte, la poudre est acheminée par la vis dans la direction d'extension du fourreau vers la sortie 271.

Le système de dosage peut être également un sas comprenant deux vannes. Le sas présente un volume prédéterminé, et permet d'isoler un volume de poudre précis lorsqu'il est rempli de poudre au travers de la première vanne située du côté du système d'aspiration 21. Le volume de poudre peut ensuite être transféré vers le boitier25 via la deuxième vanne située du côté du boitier 25.

Le boîtier 25 peut comprendre une zone de rempotage adaptée pour recevoir un récipient de poudre sous la sortie 271 du système de dosage 27 à l'intérieur du boîtier 25.

Le module de fourniture 2 comprend une trémie principale 29 qui se situe en dessous du boîtier 25. La trémie principale 29 est un contenant qui permet de conserver de la poudre de fabrication addidive.

La trémie principale 29 présente un volume de forme tronconique adapté pour conserver une importante quantité de poudre de fabrication. La trémie principale 29 est orientée de sorte que l'axe de la forme tronconique est vertical et que le volume de la forme tronconique présente une section horizontale plus faible en bas de la trémie. La trémie principale 29 présente une sortie 293 située en bas de la trémie principale.

Le boîtier 25 comprend une deuxième porte 291 agencée entre la chambre et le la trémie principale 29, mobile entre une position ouverte dans laquelle de la poudre se trouvant dans la chambre peut être transférée vers la trémie principale 29 et une position fermée dans laquelle la chambre est séparée de manière étanche de la trémie principale 29.

La deuxième porte 291 ou porte d'isolement 291 est par exemple une vanne d'isolement 291. La deuxième porte 291 définit un passage entre le boîtier et la trémie principale qui peut être ouvert ou fermé hermétiquement de manière contrôlée. Le passage peut être orienté verticalement et suffisamment large pour qu'un opérateur puisse vider le contenu d'un pot de poudre depuis le boîtier 25 vers la trémie principale 29.

Le module de fourniture 2 comprend un aiguilleur. L'aiguilleur comprend une entrée et deux sorties.

L'entrée de l'aiguilleur est l'entrée du système de dosage 27 et est reliée à la sortie 213 du système d'aspiration 21. La première sortie de l'aiguilleur est la sortie 271 du système de dosage 27.

La deuxième sortie de l'aiguilleur passe au travers du système de dosage 27 selon une direction verticale. La deuxième sortie peut être dans le prolongement de la direction d'arrivée de la poudre versée du système d'aspiration 21 dans le système de dosage 27. La deuxième sortie est reliée à un circuit de dérivation 31. Le circuit de dérivation 31 relie directement la deuxième sortie de l'aiguilleur et la trémie principale 29. Le canal de dérivation 31 peut être orienté verticalement et passer au travers de la boite à gants. La poudre passant par le circuit de dérivation 31 ne rencontre aucune paroi du boitier 25 et n'est pas en contact direct avec l'atmosphère du boitier 25. En particulier, si la vanne 28 est fermée, la poudre passant par le circuit de dérivation 31 n'est pas en contact avec l'atmosphère du boitier 25.

La deuxième sortie est contrôlée par une vanne 30. La vanne 30 en configuration ouverte permet le passage de poudre du système de dosage 27 vers le canal de dérivation 31 et la vanne 30 en configuration fermée empêche le passage de poudre du système de dosage 27 vers le canal de dérivation 31.

L'aiguilleur est configurable dans une configuration d'extraction dans laquelle de la poudre en sortie du système de dosage est dirigée sélectivement vers la boîte à gants 25. Dans cette configuration, la vanne 30 est en configuration fermée, et la vis de dosage est mise en route pour acheminer de la poudre vers la sortie 271 du système de dosage.

L'aiguilleur est configurable dans une configuration de rebouclage dans laquelle de la poudre en sortie du système de dosage 21 est dirigée sélectivement vers la deuxième sortie de l'aiguilleur. Dans cette configuration, la vanne 30 est en configuration ouverte, et la vis de dosage est à l'arrêt.

L'aiguilleur peut donc être considéré comme étant formé par le système de dosage 27 et la vanne 30.

Le module de fourniture 2 comprend un doseur 33, situé en dessous de la trémie principale 29. Le doseur 33 permet d'ajuster le débit de poudre envoyé au tamiseur 35 afin ne pas dégrader un tamis compris à l'intérieur du tamiseur 35. Le doseur 33 est relié à la sortie 293 de la trémie principale. Le doseur 33 comporte une sortie 331 située en bas du doseur 33.

Le module de fourniture 2 comprend un tamiseur 35, situé en dessous du doseur 33. Le tamiseur 35 est relié à la sortie 331 du doseur 33. Le tamiseur permet de filtrer les amas agglomérés de poudre et de les isoler du reste de la poudre au sein d'un réceptacle 351. Le tamiseur comprend un troisième circuit d'évacuation 353 qui peut comprendre une pompe à vide pour générer la force d'aspiration.

Le module de fourniture 2 comprend un réservoir 37 situé en dessous du tamiseur 35. Le réservoir 37 peut être une trémie présentant un volume de forme tronconique adapté pour conserver une importante quantité de poudre de fabrication. Cette trémie peut être orientée de sorte que l'axe de la forme tronconique est vertical et que le volume de la forme tronconique présente une section horizontale plus faible en bas de la trémie. Le réservoir 37 présente une sortie 371 située en bas du réservoir.

Il est possible de transférer de la poudre depuis la boîte à gants 25 vers le réservoir 37 lorsque la deuxième porte 291 est en position ouverte. La poudre peut alors passer successivement de la boîte à gants 25, à la trémie principale 29, au doseur 33, au tamiseur 35 puis enfin au réservoir 37. Il est possible de définir ainsi un circuit d'approvisionnement configuré pour transférer de la poudre se trouvant dans la boîte à gants 25 vers la trémie principale 29 ou plus loin le réservoir 37. La deuxième porte 291 qui définit un passage entre le boîtier et la trémie principale qui peut être ouvert ou fermé hermétiquement de manière contrôlée peut ouvrir ou fermer le circuit d'approvisionnement.

Le module de fourniture 2 comprend un système d'alimentation 36 en gaz inerte sec. Le système d'alimentation 36 peut fournir un flux de gaz inerte sec dans un conduit 352 relié au tamiseur 35. Le flux de gaz inerte sec passant par le conduit 352 est orienté du bas vers le haut de sorte à rencontrer de la poudre passant au travers du tamiseur du bas vers le haut. Le flux de gaz inerte arrivant par le conduit 352 dans le tamiseur 35 se diffuse également dans la partie supérieure du réservoir 37.

Le conduit 352 et le troisième circuit d'évacuation 353 peuvent être alignés selon une même direction, de sorte qu'un flux de gaz inerte, en suivant une même direction, peut passer successivement par le conduit 352, rencontrer de la poudre passant à travers le tamiseur et enfin passer par le troisième circuit d'évacuation 353.

Le système d'alimentation 36 peut également fournir un flux de gaz inerte sec dans un conduit 372 relié au bas du réservoir 37, par exemple à la sortie 371.

La sortie 371 du réservoir est reliée à un circuit retour 391. Le circuit retour 391 connecte la sortie 371 du réservoir 37 et l'entrée 211 du système d'aspiration 21. Le circuit retour 391 connecte la sortie 371 du réservoir 37 et le boîtier 25. Il est possible de transporter de la poudre depuis le réservoir 37 vers le boîtier 25 de la poudre en passant par le système d'aspiration 21. Le système d'aspiration 21 peut aspirer la poudre du réservoir 37 vers le système d'aspiration 21 à travers le circuit retour 391.

La sortie 371 du réservoir est également reliée à un conduit de fabrication 392. Le conduit de fabrication 392 connecte la sortie 371 du réservoir 37 et le module de fabrication 4, de sorte que de la poudre contenue dans le réservoir 37 peut être transférée vers le module de fabrication 4.

Le tamiseur 35 est situé juste au-dessus du réservoir 37 de sorte que la poudre contenue dans le réservoir 37 et transmise au module de fabrication 4 est tamisée le plus tard possible avant son envoi vers le module de fabrication 4.

Le réservoir 37 peut présenter un volume plus faible que la trémie principale 29. Le rôle du réservoir 37 est de conserver la poudre juste avant son transport soit vers le module de fabrication 4 soit vers le système d'aspiration 21. Le réservoir 37 peut être qualifié de trémie tampon.

La trémie principale 29 est adapté pour contenir une part importante de la poudre de fabrication nécessaire à la fabrication additive d'un ou plusieurs objets tridimensionnels. La poudre contenue dans la trémie principale 29 est destinée à être transmise au module de fabrication 4. A cet effet, la trémie principale 29 est adaptée pour être connectée au module de fabrication 4 configuré pour fabriquer additivement un objet sur la base de la poudre se trouvant dans la trémie principale 29. La connexion de la trémie principale 29 au module de fabrication est réalisée par la circulation de poudre passant par le doseur 33, le tamiseur 35, le réservoir ou trémie tampon 37 et enfin le conduit de fabrication 392.

Le module de fourniture 2 comprend un contrôleur 39 qui permet d'aiguiller la poudre depuis la sortie 371 vers le circuit retour 391 ou vers le conduit de fabrication 392.

Le module de fourniture 2 peut comprendre un capteur d'humidité 201 situé sur le premier circuit d'évacuation de gaz 23. Ce capteur d'humidité 201 permet de connaître le taux d'humidité des gaz évacués par le système d'aspiration 21, c'est-à-dire le taux d'humidité en amont de l'entrée 211 du système d'aspiration 21.

Le module de fourniture 2 peut comprendre un capteur d'humidité 202 situé sur une partie supérieure de la trémie principale 29. Ce capteur d'humidité 202 permet de connaître le taux d'humidité dans la trémie principale 29 et de renseigner directement sur le taux d'humidité d'une poudre éventuellement présente dans la trémie principale 29.

Le module de fourniture 2 peut comprendre un capteur d'humidité 203 relié au le système d'alimentation 36 en gaz inerte sec. Ce capteur d'humidité 203 permet de connaître le taux d'humidité du gaz inerte sec envoyé vers le tamiseur 35 ou le réservoir 37.

Le module de fourniture 2 comprend un système de mise en circulation comprenant le système d'aspiration 21.

Le système d'aspiration 21 peut aspirer la poudre du réservoir 37 vers le système d'aspiration 21 à travers le circuit retour 391.

### Module de fabrication

Le module de fabrication 4 comprend dans sa partie supérieure un deuxième système d'aspiration 41 relié à un quatrième circuit d'évacuation de gaz 43. Le deuxième système d'aspiration 41 présente une entrée 411 et une sortie 413 située au bas du deuxième système d'aspiration 41. Le deuxième système d'aspiration 41 est adapté pour générer une force d'aspiration au niveau de l'entrée 411 dirigée vers l'intérieur du deuxième système d'aspiration 41. L'entrée 411 du deuxième système d'aspiration 41 est connectée au conduit de fabrication 392. Le quatrième circuit d'évacuation de gaz 43 peut comprendre une pompe à vide pour générer la force d'aspiration. Le deuxième système d'aspiration 41 peut comprendre un filtre à poudre pour que la poudre ne passe pas dans le quatrième circuit d'évacuation de gaz 43. Le deuxième système d'aspiration 41 comprend un dispositif qui permet de séparer la poudre du gaz comme par exemple un cyclone. D'autres dispositifs existent pour séparer la poudre au gaz comme un caisson de filtration comprenant des filtres, un cyclofiltre ou une boîte de décharge. Le deuxième système d'aspiration 41 est adapté pour recevoir de la poudre de fabrication additive depuis l'entrée 411, et la conserver. La poudre conservée se situe au bas du deuxième système d'aspiration 41 et peut être extraite par la sortie 413.

Le module de fabrication 4 comprend un sas 45 situé en dessous du deuxième système d'aspiration 41. Le sas 45 permet de transmettre de la poudre sans que la chambre de l'imprimante ne soit jamais en communication avec le deuxième système d'aspiration 41 pour éviter de perturber l'enceinte d'impression vis-à-vis de l'inertage et de la pression.

Le module de fabrication 4 comprend une vis divergente 47 et une vis convergente 51 situées de part et d'autre d'une enceinte 49 au sein de laquelle les objets tridimensionnels sont fabriqués. L'enceinte 49 est la chambre de l'imprimante.

Le module de fabrication 4 comprend un système de récupération de la poudre étalée et non consolidée en fin de fabrication.

Le système de récupération peut comprendre une canne d'aspiration 53 adaptée pour aspirer de la poudre. La canne d'aspiration 53 comprend un bec d'aspiration 533 qui constitue l'entrée de la canne d'aspiration. La poudre est aspirée au niveau du bec et transmise vers l'autre extrémité de la canne qui constitue la sortie de la canne d'aspiration 53. Le dispositif de fabrication 1 peut comprendre un premier conduit de récupération 531 qui connecte la sortie de la canne d'aspiration 53 et l'entrée 211 du système d'aspiration 21.

Le système de récupération peut comprendre un sas excédant 55 adapté pour récupérer de la poudre en provenance de la vis convergente 51.

Le dispositif de fabrication 1 peut comprendre un deuxième conduit de récupération 551 qui connecte le sas excédant 55 et l'entrée 211 du système d'aspiration 21.

Le sas excédant 55 permet de transmettre de la poudre sans que la chambre de l'imprimante ne soit jamais en communication avec le deuxième conduit de récupération 551 pour éviter de perturber l'enceinte d'impression vis-à-vis de l'inertage et de la pression.

Le dispositif de fabrication 1 peut également comprendre un deuxième contrôleur adapté pour faire circuler la poudre de manière contrôlée depuis le système de récupération vers le système d'aspiration 21.

L'entrée 211 peut à ce titre être qualifiée d'entrée du module de fourniture 2 adaptée pour être connectée au module de fabrication 4 et recevoir de la poudre se trouvant dans le module de fabrication 4.

Il est à noter que le dispositif de fabrication 1 comprend suffisamment de vannes au niveau des croisements de conduits 391, 392, 531 et 551 pour permettre les circulations de poudre mentionnées dans la description.

Il est à noter également qu'il est possible de transférer de la poudre depuis l'entrée 211 vers la boite à gants 25. La poudre passe successivement par le système d'aspiration 21, la sortie 213 du système d'aspiration 21, le système de dosage 27, l'aiguilleur 27, 30 configuré dans sa configuration d'extraction et enfin la boîte à gants 25. Plus précisément, la poudre qui arrive dans la boite à gants 25 peut être versée dans un récipient contenu dans la boite à gants 25. Il existe ainsi un circuit d'extraction différent du circuit d'approvisionnement et configuré pour transférer vers le récipient, lorsque le récipient est reçu dans la boîte à gants 25, de la poudre de fabrication additive depuis l'entrée 211 du module de fourniture 2, le circuit d'extraction comprenant l'aiguilleur 27,30.

### Procédé de séchage d'une poudre de fabrication additive

Initialement de la poudre humide se trouve dans le réservoir principal 37.

Au cours d'une première étape E1, le système de mise en circulation met en circulation la poudre humide dans une boucle de circulation.

Il est possible de définir une boucle de circulation dans le module de fourniture 2. La boucle de circulation passe par la trémie principale 29, le tamiseur 35, le réservoir 37, le circuit retour 391, le système d'aspiration 21 le canal de dérivation 31 et à nouveau la trémie principale 29.

Le circuit d'alimentation 372 en gaz inerte relié en haut du réservoir et en bas du réservoir est activé pour entraîner la poudre non utilisée dans le circuit retour 391. Le système d'aspiration 21 est activé pour générer une force d'aspiration au niveau de l'entrée 211 dirigée vers l'intérieur du système d'aspiration 21. Cette mise en mouvement peut être faite selon les différents régimes possibles de transport régime en phase dense, régime en phase diluée, etc... La concentration en poudre dans les conduits de circulation et la vitesse du flux de gaz sont contrôlables à cet effet.

D'une part le système de mise en circulation qui permet de mettre en mouvement de la poudre humide et d'autre part le système d'aspiration qui permet d'aspirer l'humidité de l'environnement gazeux de la poudre permettent globalement de sécher plus rapidement et plus efficacement la poudre. Il y a, au cours de la période où la poudre est mise en circulation, une évacuation d'air contenant de l'humidité et une injection de gaz sec au sein de la boucle de circulation.

L'évacuation d'air contenant de l'humidité peut notamment avoir lieu via le premier circuit d'évacuation 23 ou le troisième circuit d'évacuation 353.

Par conséquent du gaz humide est extrait et remplacé par du gaz sec dans la boucle de circulation. L'humidité du gaz et de la poudre contenus dans la boucle de circulation a donc tendance à diminuer. Par ailleurs la poudre étant mise en mouvement, il y a un contact dynamique des grains de poudre avec du gaz sec ce qui a tendance à accélérer le séchage de la poudre.

Aucun élément mécanique mobile, comme un malaxeur, plongeant à l'intérieur d'un réservoir contenant de la poudre n'est utilisé de sorte que les moyens de séchage ne perturbent pas le bon fonctionnement de la machine de fabrication additive.

Au cours d'une deuxième étape E2, un ou plusieurs capteurs d'humidité acquièrent une mesure de sorte à mesurer le taux d'humidité dans la boucle de circulation.

Le capteur 202 permet de mesurer directement le taux d'humidité dans la boucle de circulation au niveau de la trémie principale 29. Dans le cas où un volume important de poudre est contenu dans la trémie principale, le capteur d'humidité 202 donne une indication qui change relativement lentement au cours du temps.

Les capteurs 201 et 203 permettent d'acquérir une mesure d'humidité respectivement sur le premier circuit d'évacuation 23 du système d'aspiration 21 et une mesure d'humidité sur la voie d'entrée du système d'alimentation en gaz inerte sec 36. La combinaison de ces mesures permet d'estimer le taux d'humidité dans la boucle de circulation. Les capteurs d'humidité 201 et 203 peuvent être utilisés en combinaison et donnent alors une indication sur l'humidité de la poudre qui a été mise en circulation dans la poudre. Cette indication change relativement rapidement au cours du temps. En revanche, dans le cas où un volume important de poudre est contenu dans le module de fourniture et en particulier dans la trémie principale 29, les capteurs d'humidité 201 et 203 ne donnent une indication que sur l'humidité de la fraction du volume poudre qui a été mise en mouvement et ne renseignent qu'indirectement sur l'humidité de l'ensemble de la poudre.

La deuxième étape E2 permet de surveiller au cours du temps l'évolution du taux d'humidité dans la boucle de circulation et d'estimer s'il est nécessaire ou non de poursuivre le procédé de séchage.

Au cours d'une troisième étape E3, le taux d'humidité mesuré est comparé à un taux seuil. Typiquement le taux seuil est un taux d'humidité de l'environnement gazeux de la poudre pour lequel la poudre mise en mouvement dans la boucle de circulation présente une humidité suffisamment basse pour son utilisation pour fabrication. Le taux seuil peut typiquement être égal à 5% d'humidité relative à une température de 25 degrés.

L'étape de comparaison entre le taux d'humidité mesuré et le taux seuil peut être effectuée par un opérateur ou automatiquement par une unité de contrôle. En fonction du résultat de cette étape de comparaison, la poudre est mise en mouvement ou non.

Au cours d'une quatrième étape E4, le tamiseur tamise de la poudre mise en circulation dans la boucle de circulation. Plus précisément, la poudre mise en circulation arrive au tamiseur et le tamiseur tamise la poudre qui arrive. L'étape de tamisage permet de mettre en mouvement et séparer la poudre dans une atmosphère gazeuse sèche, ce qui permet d'accélérer encore le séchage de la poudre.

Au cours d'une cinquième étape E5, le système de mise en circulation met fin au mouvement de la poudre dans la boucle de circulation. Une fois que la poudre est jugée suffisamment sèche, la mise en circulation de la poudre est arrêtée. Le résultat de la troisième étape E3 de comparaison est donc utilisé pour activer la cinquième étape. La troisième étape E3 et la cinquième étape E5 permettent de travailler avec un seuil quantitatif précis pour mettre fin au procédé de séchage.

## Revendications

1. Dispositif (1) de fabrication additive comprenant :
• un module de fourniture (2) de poudre de fabrication additive comprenant :
- une trémie principale (29) pour stocker de la poudre de fabrication additive,
- une entrée (211) du module de fourniture (2),
- une boîte à gants (25) adaptée pour recevoir un récipient (28), la boîte à gants (25) étant propre à être fermée de manière étanche, et
- un circuit d'approvisionnement configuré pour transférer de la poudre se trouvant dans la boîte à gants (25) vers la trémie principale (29), et
• un module de fabrication (4), entièrement distinct du module de fourniture (2), configuré pour fabriquer additivement un objet dans une enceinte (49) sur la base de la poudre se trouvant dans la trémie principale (29), la trémie principale (29) étant connectée au module de fabrication (4) par un conduit de fabrication (392) et l'entrée (211) du module de fourniture (2) étant connectée au module de fabrication (4) par un conduit de récupération (531), l'entrée (211) étant configurée pour recevoir de la poudre se trouvant dans le module de fabrication (4),
le dispositif (1) étant **caractérisé en ce que** le module de fourniture (2) comprend en outre un système de mise en circulation adapté pour mettre en mouvement de la poudre selon une boucle de circulation fermée sur elle-même, le système de mise en circulation comprenant un système d'aspiration (21) distant de la trémie principale (29), le système d'aspiration (21) étant adapté pour évacuer du gaz présent dans la boucle de circulation, la boucle de circulation passant par la trémie principale (29) et le système d'aspiration (21), le système d'aspiration (21) aspirant la poudre de la trémie principale (29) vers le système d'aspiration (21) à travers un circuit retour (391).

2. Dispositif (1) selon la revendication 1 dans lequel la boucle de circulation comprend un réservoir (37) situé en dessous de la trémie principale (29) et comprenant une sortie (371) adaptée pour être connectée au module de fabrication (4) par le conduit de fabrication (392), le circuit retour (391) étant configuré pour rediriger vers l'entrée (211) du module de fourniture (2) de la poudre de fabrication additive se trouvant dans le réservoir (37),
le système de mise en circulation étant adapté pour aspirer de la poudre depuis la sortie (371) du réservoir (37) vers l'entrée (211) du module de fourniture (2).

3. Dispositif (1) selon la revendication 2 dans lequel le module de fourniture (2) comprend un système d'alimentation (36) en gaz inerte sec adapté pour alimenter la boucle de circulation en gaz inerte sec en dessous de la trémie principale (29).

4. Dispositif (1) selon l'une des revendications 1 à 3 dans lequel le module de fourniture (2) comprend en outre un capteur d'humidité (201, 202, 203) adapté pour mesurer le taux d'humidité dans la boucle de circulation.

5. Dispositif (1) selon l'une des revendications 2 à 4, dans lequel le module de fourniture (2) comprend en outre un tamiseur (35) situé au-dessus du réservoir (37).

6. Dispositif (1) selon la revendication 5, dans lequel la poudre parcourant la boucle de circulation passe successivement par la trémie principale (29), le tamiseur (35), le réservoir (37), le circuit retour (391) et le système d'aspiration (21), un premier capteur d'humidité (202) étant adapté pour mesurer le taux d'humidité dans la trémie principale (29).

7. Dispositif (1) selon la revendication 3, le module de fourniture (2) comprenant un deuxième capteur d'humidité (201) placé sur un circuit d'évacuation (23) de gaz du système d'aspiration (21) et un troisième capteur d'humidité (203) relié au système d'alimentation (36) en gaz inerte sec.

8. Dispositif (1) selon l'une des revendications 1 à 7, le module de fourniture (2) comprenant
- un circuit d'extraction différent du circuit d'approvisionnement et configuré pour transférer vers le récipient, lorsque le récipient est reçu dans la boîte à gants (25), de la poudre de fabrication additive depuis l'entrée (211) du module de fourniture (2), le circuit d'extraction comprenant un aiguilleur (27, 30),
- un circuit de dérivation (31) reliant l'aiguilleur (27, 30) au réservoir (37) adapté pour transférer de la poudre directement de l'aiguilleur (27,30) au réservoir (37), l'aiguilleur (27, 30) étant configurable dans
- une configuration d'extraction dans laquelle de la poudre additive en provenance de l'entrée (211) du module de fourniture (2) est redirigée sélectivement vers la boîte à gants (25),
- une configuration de rebouclage dans laquelle de la poudre additive en provenance de l'entrée (211) du module de fourniture (2) est redirigée sélectivement dans le circuit de dérivation (31),
l'aiguilleur (27, 30) étant configuré selon la configuration de rebouclage lorsque le système de mise en circulation met en mouvement de la poudre de la sortie (371) du réservoir vers l'entrée (211) du module de fabrication (2).

9. Dispositif (1) selon la revendication 8, dans lequel le module de fabrication (4) comprend un système de récupération (53, 55) pour récupérer de la poudre non consolidée au cours de la fabrication additive de l'objet et pour rediriger la poudre récupérée vers l'entrée (211) du module de fourniture (2).

10. Procédé (P) de séchage de poudre de fabrication additive utilisant un module de fourniture (2) d'un dispositif (1) selon l'une des revendications 1 à 9 comprenant lorsque de la poudre est présente dans la trémie principale (29) une étape (E1) de mise en circulation de la poudre dans la boucle de circulation par le système de mise en circulation.

11. Procédé (P) de séchage selon la revendication 10, utilisant un module de fourniture (2) d'un dispositif (1) selon la revendication 4, comprenant les étapes suivantes
- une étape (E2) de mesure du taux d'humidité dans la boucle de circulation,
- une étape (E3) de comparaison du taux d'humidité mesuré à un taux seuil,
- une étape (E5) d'arrêt de la mise en circulation de la poudre, l'étape (E5) d'arrêt de la mise en circulation étant mise en œuvre selon le résultat de l'étape (E3) de comparaison.

12. Procédé de séchage selon la revendication 10 ou 11, utilisant un module de fourniture (2) d'un dispositif (1) selon la revendication 5, comprenant une étape (E4) de tamisage de la poudre mise en circulation.

## Patentansprüche

1. Vorrichtung (1) für additive Fertigung, umfassend:
• ein Versorgungsmodul (2) für Pulver für die additive Fertigung, umfassend:
- einen Haupttrichter (29) zum Lagern von Pulver für die additive Fertigung,
- einen Einlass (211) des Versorgungsmoduls (2),
- eine Schutzkammer (25), die zum Aufnehmen eines Behälters (28) angepasst ist, wobei die Schutzkammer (25) geeignet ist, um auf dichte Art und Weise verschlossen zu werden, und
- einen Bereitstellungskreislauf, der zum Übertragen von Pulver, das sich in der Schutzkammer (25) befindet, zu dem Haupttrichter (29) konfiguriert ist, und
• ein Fertigungsmodul (4), das völlig verschieden von dem Versorgungsmodul (2) ist, das zum additiven Fertigen eines Objekts in einem Gehäuse (49) auf Basis von Pulver, das sich in dem Haupttrichter (29) befindet, konfiguriert ist, wobei der Haupttrichter (29) mit dem Fertigungsmodul (4) durch eine Fertigungsleitung (392) verbunden ist und der Einlass (211) des Versorgungsmoduls (2) mit dem Fertigungsmodul (4) über eine Rückgewinnungsleitung (531) verbunden ist, wobei der Einlass (211) zum Aufnehmen von Pulver, das sich in dem Fertigungsmodul (4) befindet, konfiguriert ist,
wobei die Vorrichtung (1) **dadurch gekennzeichnet ist, dass** das Versorgungsmodul (2) ferner ein System zum Inzirkulationsetzen, das zum Inbewegungsetzen von Pulver gemäß einer in sich geschlossenen Zirkulationsschleife angepasst ist, umfasst, das System zum Inzirkulationsetzen umfassend ein Saugsystem (21), das von dem Haupttrichter (29) entfernt ist, wobei das Saugsystem (21) zum Ableiten des Gases angepasst ist, das in der Zirkulationsschleife vorhanden ist, wobei die Zirkulationsschleife über den Haupttrichter (29) und das Saugsystem (21) verläuft, wobei das Saugsystem (21) das Pulver aus dem Haupttrichter (29) zu dem Saugsystem (21) durch einen Rücklaufkreislauf (391) saugt.

2. Vorrichtung (1) nach Anspruch 1, wobei die Zirkulationsschleife ein Reservoir (37), das unterhalb des Haupttrichters (29) gelegen ist, umfasst und umfassend einen Auslass (371), der angepasst ist, um mit dem Fertigungsmodul (4) über die Fertigungsleitung (392) verbunden zu werden, wobei der Rücklaufkreislauf (391) zum Umlenken, zu dem Einlass (211) des Versorgungsmoduls (2), von Pulver für die additive Fertigung, das sich in dem Reservoir (37) befindet, konfiguriert ist, wobei das System zum Inzirkulationsetzen zum Saugen des Pulvers von dem Auslass (371) des Reservoirs (37) zu dem Einlass (211) des Versorgungsmoduls (2) angepasst ist.

3. Vorrichtung (1) nach Anspruch 2, wobei das Versorgungsmodul (2) ein Beschickungssystem (36) für Trockeninertgas, das zum Beschicken der Zirkulationsschleife mit Trockeninertgas unterhalb des Haupttrichters (29) angepasst ist, umfasst.

4. Vorrichtung (1) nach einem der Ansprüche 1 bis 3, wobei das Versorgungsmodul (2) ferner einen Feuchtigkeitssensor (201, 202, 203) umfasst, der zum Messen des Feuchtigkeitsgrads in der Zirkulationsschleife angepasst ist.

5. Vorrichtung (1) nach einem der Ansprüche 2 bis 4, wobei das Versorgungsmodul (2) ferner ein Sieb (35), das oberhalb des Reservoirs (37) gelegen ist, umfasst.

6. Vorrichtung (1) nach Anspruch 5, wobei das Pulver, das durch die Zirkulationsschleife durchläuft, nachfolgend über den Haupttrichter (29), das Sieb (35), das Reservoir (37), den Rücklaufkreislauf (391) und das Saugsystem (21) verläuft, wobei ein erster Feuchtigkeitssensor (202) zum Messen des Feuchtigkeitsgrads in dem Haupttrichter (29) angepasst ist.

7. Vorrichtung (1) nach Anspruch 3, das Versorgungsmodul (2) umfassend einen zweiten Feuchtigkeitssensor (201), der an einem Gasableitkreislauf (23) des Saugsystems (21) eingerichtet ist, und einen dritten Feuchtigkeitssensor (203), der an das Beschickungssystem (36) für Trockeninertgas angeschlossen ist.

8. Vorrichtung (1) nach einem der Ansprüche 1 bis 7, das Versorgungsmodul (2) umfassend
- einen Absaugkreislauf, der sich von dem Bereitstellungskreislauf unterscheidet und zum Übertragen zu dem Behälter, wenn der Behälter in der Schutzkammer (25) aufgenommen ist, von Pulver für die additive Fertigung von dem Einlass (211) des Versorgungsmoduls (2) konfiguriert ist, der Absaugkreislauf umfassend einen Umleiter (27, 30),
- einen Abzweigkreislauf (31), der den Umleiter (27, 30) an das Reservoir (37) anschließt, der zum Übertragen des Pulvers direkt von dem Umleiter (27,30) an das Reservoir (37) angepasst ist, wobei der Umleiter (27, 30) konfigurierbar ist in
- eine Absaugkonfiguration, wobei das Additivpulver aus dem Einlass (211) des Versorgungsmoduls (2) in die Schutzkammer (25) selektiv umgelenkt wird,
- eine Rückschleifenkonfiguration, wobei das Additivpulver aus dem Einlass (211) des Versorgungsmoduls (2) in den Abzweigkreislauf (31) selektiv umgelenkt wird, wobei der Umleiter (27, 30) gemäß der Rückschleifenkonfiguration konfiguriert ist, wenn das System zum Inzirkulationsetzen Pulver von dem Auslass (371) des Reservoirs zu dem Einlass (211) des Fertigungsmoduls (2) in Bewegung setzt.

9. Vorrichtung (1) nach Anspruch 8, wobei das Fertigungsmodul (4) ein Rückgewinnungssystem (53, 55) zum Rückgewinnen von nicht verfestigtem Pulver während der additiven Fertigung des Objekts und zum Umlenken des rückgewonnenen Pulvers zu dem Einlass (211) des Versorgungsmoduls (2) umfasst.

10. Verfahren (P) zum Trocknen von Pulver für die additive Fertigung unter Verwendung eines Versorgungsmoduls (2) einer Vorrichtung (1) nach einem der Ansprüche 1 bis 9, umfassend, wenn Pulver in dem Haupttrichter (29) vorhanden ist, einen Schritt (E1) zum Inzirkulationsetzen von Pulver in der Zirkulationsschleife durch das System zum Inzirkulationsetzen.

11. Verfahren (P) zum Trocknen nach Anspruch 10 unter Verwendung eines Versorgungsmoduls (2) einer Vorrichtung (1) nach Anspruch 4, umfassend die folgenden Schritte
- einen Schritt (E2) zum Messen des Feuchtigkeitsgrads in der Zirkulationsschleife,
- einen Schritt (E3) zum Vergleichen des gemessenen Feuchtigkeitsgrads mit einem Schwellengrad,
- einen Schritt (E5) zum Stoppen des Inzirkulationsetzens des Pulvers, wobei der Schritt (E5) zum Stoppen des Inzirkulationsetzens gemäß dem Ergebnis des Vergleichsschritts (E3) durchgeführt wird.

12. Verfahren zum Trocknen nach Anspruch 10 oder 11 unter Verwendung eines Versorgungsmoduls (2) einer Vorrichtung (1) nach Anspruch 5, umfassend einen Schritt (E4) zum Sieben des in Zirkulation gesetzten Pulvers.

## Claims

1. Additive manufacturing device (1) comprising:
• an additive manufacturing powder supply module (2) comprising:
- a main hopper (29) for storing additive manufacturing powder,
- an inlet (211) of the supply module (2),
- a glove box (25) suitable for receiving a container (28), the glove box (25) being able to be sealed, and
- a supply circuit configured to transfer powder from the glove box (25) to the main hopper (29), and
• a manufacturing module (4), entirely separate from the supply module (2), configured to additively manufacture an object in an enclosure (49) on the basis of the powder in the main hopper (29), the main hopper (29) being connected to the manufacturing module (4) by a manufacturing duct (392) and the inlet (211) of the supply module (2) being connected to the manufacturing module (4) by a recovery duct (531), the inlet (211) being configured to receive powder from the manufacturing module (4),
the device (1) being **characterized in that** the supply module (2) further comprises a circulation system suitable for setting powder in motion in a self-contained circulation loop, the circulation system comprising a suction system (21) remote from the main hopper (29), the suction system (21) being suitable for evacuating gas present in the circulation loop, the circulation loop passing through the main hopper (29) and the suction system (21), the suction system (21) drawing powder from the main hopper (29) to the suction system (21) via a return circuit (391).

2. Device (1) according to claim 1 wherein the circulation loop comprises a reservoir (37) located below the main hopper (29) and comprising an outlet (371) suitable for being connected to the manufacturing module (4) via the manufacturing duct (392), the return circuit (391) being configured to redirect additive manufacturing powder in the reservoir (37) to the inlet (211) of the supply module (2), the circulation system being suitable for drawing powder from the outlet (371) of the reservoir (37) to the inlet (211) of the supply module (2).

3. Device (1) according to claim 2 wherein the supply module (2) comprises a dry inert gas supply system (36) suitable for supplying the dry inert gas circulation loop below the main hopper (29).

4. Device (1) according to any of claims 1 to 3 wherein the supply module (2) further comprises a moisture sensor (201, 202, 203) suitable for measuring the humidity level in the circulation loop.

5. Device (1) according to any of claims 2 to 4, wherein the supply module (2) further comprises a sieve (35) located above the reservoir (37).

6. Device (1) according to claim 5, wherein the powder passing through the circulation loop passes successively through the main hopper (29), the sieve (35), the reservoir (37), the return circuit (391) and the suction system (21), a first moisture sensor (202) being suitable for measuring the humidity level in the main hopper (29).

7. Device (1) according to claim 3, the supply module (2) comprising a second moisture sensor (201) placed on a gas discharge circuit (23) of the suction system (21) and a third moisture sensor (203) connected to the dry inert gas supply system (36).

8. Device (1) according to any of claims 1 to 7, the supply module (2) comprising
- an extraction circuit different from the supply circuit and configured to transfer to the container, when the container is received in the glove box (25), additive manufacturing powder from the inlet (211) of the supply module (2), the extraction circuit comprising a diverter (27, 30),
- a bypass circuit (31) connecting the diverter (27, 30) to the reservoir (37) suitable for transferring powder directly from the diverter (27, 30) to the reservoir (37), the diverter (27, 30) being configurable in
- an extraction configuration in which additive powder from the inlet (211) of the supply module (2) is selectively redirected to the glove box (25),
- a feedback configuration in which additive powder from the inlet (211) of the supply module (2) is selectively redirected into the bypass circuit (31),
the diverter (27, 30) being configured in the feedback configuration when the circulation system moves powder from the reservoir outlet (371) to the inlet (211) of the manufacturing module (2).

9. Device (1) according to claim 8, wherein the manufacturing module (4) comprises a recovery system (53, 55) for recovering unconsolidated powder during additive manufacturing of the object and for redirecting the recovered powder to the inlet (211) of the supply module (2).

10. Process (P) for drying additive manufacturing powder using a supply module (2) of a device (1) according to any of claims 1 to 9 comprising, when powder is present in the main hopper (29), a step (E1) of circulating the powder in the circulation loop by the circulation system.

11. Drying process (P) according to claim 10, using a supply module (2) of a device (1) according to claim 4, comprising the following steps
- a step (E2) to measure the humidity level in the circulation loop,
- a step (E3) for comparing the measured humidity level with a threshold level,
- a step (E5) of stopping the circulation of the powder, the step (E5) of stopping the circulation being implemented according to the result of the comparison step (E3).

12. Drying process according to claim 10 or 11, using a supply module (2) of a device (1) according to claim 5, comprising a step (E4) of sieving the circulated powder.
